(19) Europäisches Patentamt
European Patent Office
Office européen des brevets

(11) **EP 1 359 539 A2**

(12) **EUROPÄISCHE PATENTANMELDUNG**

(43) Veröffentlichungstag:
05.11.2003 Patentblatt 2003/45

(51) Int Cl.$^7$: **G06N 3/04**

(21) Anmeldenummer: 03100864.2

(22) Anmeldetag: 02.04.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **30.04.2002 DE 10219403**

(71) Anmelder: **SIEMENS AKTIENGESELLSCHAFT**
**80333 München (DE)**

(72) Erfinder: **Deco, Gustavo**
**08340 Vilassar de Mar (ES)**

(54) **Neurodynamisches Modell der Verarbeitung visueller Informationen**

(57) Das Modell ist ein Neurosimulator der dritten Generation. Es weist eine Mehrzahl von Arealen auf, deren Funktionen mit den Funktionen der Areale des dorsalen und ventralen Pfads des visuellen Kortex des menschlichen Gehirns identifiziert werden können. Eine Rückkopplung zwischen verschiedenen Arealen während der Verarbeitung ist vorgesehen. Ferner ist ein Wettbewerb um die Aufmerksamkeit zwischen verschiedenen Merkmalen und/oder verschiedenen räumlichen Bereichen vorgesehen. Das Modell ist sehr flexibel zur Bildverarbeitung geeignet. Es bildet die natürliche menschliche Bildverarbeitung nach und erklärt viele experimentell beobachtete Phänomene.

FIG 1

Printed by Jouve, 75001 PARIS (FR)

EP 1 359 539 A2

**Beschreibung**

Bildverarbeitung bedeutet in erster Linie Objekterkennung und visuelle Suche vordefinierter Muster.

Bei klassischen Modellen der Bildverarbeitung, etwa der digitalen Bildverarbeitung, wird ein aufgenommenes Bild in sukzessiv höheren Ebenen der Verarbeitung analysiert. Bei der Suche nach einem Merkmal in einem Bild, z. B. des Eiffelturms von Paris, würde demnach in der klassischen Bildverarbeitung zwischen zwei Fragen unterschieden:

- Die erste Frage lautet: Welches Objekt ist z. B. in der Mitte des Bildes zu sehen? Also eine so genannte "what"-Frage, die Frage nach der Erkennung eines Objekts am vorgegebenen Ort (Objekterkennung).

- Die zweite Frage lautet: Wo ist der Eiffelturm? Dies ist eine so genannte "where"-Frage. Sie sucht den Ort des bekannten Merkmals im Bild (Templatesuche). Typischerweise würde dazu das aufgenommene Bild mit einem vorgegebenen, passenden Fenster, das dem gesuchten Muster entspricht, abgesucht.

Aufgabe der Erfindung ist es, die Objekterkennung und visuelle Suche vordefinierter Muster in der Verarbeitung aufgenommener Bilder zu verbessern.

Diese Aufgabe wird durch die Erfindungen gemäß den unabhängigen Ansprüchen gelöst. Vorteilhafte Weiterbildungen der Erfindungen sind in den Unteransprüchen gekennzeichnet.

fMRI-Experimente (fMRI, funtional magnetic resonance imaging) [Kastner, S., De Weerd, P., Desimone, R., und Ungerleider, L. (1998). "Mechanism of directed attention in the human extrastriate cortex as revealed by functional MRI". Science, 282, 108-111; Wojciulik, E., Kanwisher, N., und Driver, J. (1998). "Covert visual attention modulates face-specific activity in the human fusiform gyrus: fMRI study". Journal of Neurophysiology, 79, 1574-1578] und die Beobachtung der Aktivität einzelner Zellen im Gehirn [Moran, J. und Desimone, R. (1985). "Selective attention gates visual processing in the extrastriate cortex". Science, 229, 782-784; Spitzer, H., Desimone, R. and Moran, J. (1988). "Increased attention enhances both behavioral and neuronal performance". Science, 240, 338-340; Sato, T. (1989). "Interactions of visual stimuli in the receptive fields of inferior temporal neurons in awake macaques". Experimental Brain Research, 77, 23-30; Motter, B. (1993). "Focal attention produces spatially selective processing in visual cortical areas V1, V2 and V4 in the presence of competing stimuli". Journal of Neurophysiology, 70, 909-919; Miller, E., Gochin, P. and Gross, C. (1993). "Supression of visual responses of neurons in inferior temporal cortex of the awake macaque by addition of a second stimulus". Brain Research, 616, 25-29; Chelazzi, L., Miller, E. Duncan, J. and Desimone, R. (1993). "A neural basis for visual search in inferior temporal cortex". Nature (London), 363, 345-347; Reynolds, J., Chelazzi, L. and Desimone, R. (1999). "Competitive mechanisms subserve attention in macaque areas V2 and V4". Journal of Neuroscience, 19, 1736-1753] haben deutliche Hinweise darauf ergeben, dass die Aufmerksamkeit das Verarbeiten visueller Informationen beeinflusst. Die Beeinflussung erfolgt in der Weise, dass die Aktivität derjenigen Neuronen verstärkt wird, die das erwartete Merkmal (Form, Farbe etc.) oder den erwarteten Ort repräsentieren, während die Aktivität von benachbarten Neuronen reduziert wird, die andernfalls eine hemmende Wirkung auf die aktiven Neuronen ausüben würden.

Bei klassischen Modellen der Bildverarbeitung, etwa der digitalen Bildverarbeitung, spielt Aufmerksamkeit keine Rolle. Vielmehr wird ein aufgenommenes Bild im Wege eines so genannten Bottom-up-Approachs in sukzessiv höheren Ebenen der Verarbeitung analysiert.

Im Gegensatz zu diesen klassischen Modellen der Bildverarbeitung hat sich gezeigt, dass ein so genannter Top-down-Approach die realen Gegebenheiten des visuellen Kortex besser widerspiegelt. Bei einem Top-down-Approach werden Zwischenergebnisse auf einer höheren Verarbeitungsebene im Wege der Rückkopplung dazu genutzt, tiefere Verarbeitungsebenen sinnvoll erneut auszuwerten. Wichtig ist das Moment der Rückkopplung zwischen den einzelnen Ebenen.

Das Modell ist in einer Mehrzahl von Arealen strukturiert, deren Funktionen mit den Funktionen der Areale des dorsalen und ventralen Pfads des visuellen Kortex identifiziert werden können. Im weiter unten konkret zu schildernden Modell wird die Rückkopplung durch die Wechselwirkung einzelner Areale realisiert.

Die Rückkopplung führt zu einer Verschiebung des Gleichgewichts im Aufmerksamkeits-Wettbewerb der einzelnen Neuronen bzw. Gruppen von Neuronen (Pools, siehe unten). Es kommt so zu einem zunehmend ungleichen Wettbewerb um die Aufmerksamkeit. Die relevanten Merkmale oder räumlichen Bereiche des Bildes emergieren dadurch im Verlaufe der Bildverarbeitung; sie heben sich nach einiger Zeit von den anderen potentiellen Merkmalen ab.

Erst eine erhöhte Aufmerksamkeit für einen bestimmten räumlichen Bereich oder ein Merkmal oder Objekt und eine damit einhergehende Vernachlässigung der sonstigen Merkmale oder räumlichen Bereiche ermöglicht eine Reduzierung der Datenmenge eines Bildes und damit eine gezielte Wahrnehmung einzelner Objekte.

Dabei wird das aufgenommene Bild nicht mit einem Fenster stückweise abgesucht. Vielmehr wird stets das gesamte Bild parallel verarbeitet.

Vorteilhafterweise wird ein Neurosimulator der dritten Generation (Neurokognition) zur Verarbeitung herangezogen. Als Neurosimulatoren der ersten Generation werden Modelle von Netzen von Neuronen auf mehr oder weniger statischer Basis bezeichnet, die klassischen neuronalen Netze. Als Neurosimulatoren der zweiten Generation werden Modelle des dynamischen Verhaltens der Neuronen, insbesondere der von ihnen erzeugten Pulse, bezeichnet. Als Neurosimulatoren der dritten Generation bezeichnet man schließlich hierarchische Modelle der Organisation der Neuronen in Pools und der Pools in Areale. Dabei umfasst ein Pool Tausende von Neuronen. Dies führt einerseits zu einer Reduktion der Komplexität des neuronalen Netzes. Andererseits entspricht das neuronale Netz in seiner Struktur damit der Struktur des Gehirns.

Eine weitere Reduktion der Komplexität kann erreicht werden, wenn die Aktivität der Pools durch ein mean-field-Modell beschrieben wird, das besser an die Analyse von schnellen Änderungen angepasst ist als die genaue Berechnung der Aktivität der einzelnen Neuronen.

Der Wettbewerb um die Aufmerksamkeit wird vorzugsweise auf der Ebene der Pools ausgetragen. Der Wettbewerb kann dann über mindestens einen inhibitorischen Pool vermittelt werden, der eine hemmende Wirkung auf die Aktivität der Pools ausübt.

Sinnvoll ist es, das neuronale Netz derart zu gestalten, dass die Aufmerksamkeit für ein bestimmtes zu identifizierendes Objekt oder für ein bestimmtes zu lokalisierendes Objekt erhöht werden kann. Eine solche erhöhte Aufmerksamkeit bzw. eine Verschiebung (Bias) des Gleichgewichts im Wettbewerb um die Aufmerksamkeit (ungleichen Wettbewerb um die Aufmerksamkeit, "biased competition") kann durch Signale hervorgerufen bzw. verstärkt werden, die aus Arealen außerhalb des visuellen Kortex stammen. Diese (externen) Signale können in den visuellen Kortex eingekoppelt werden, wo sie bestimmte Merkmale oder räumliche Bereiche stimulieren. Sie beeinflussen den Wettbewerb um die Aufmerksamkeit in der Weise, dass bei einer Vielzahl von stimulierenden Einflüssen, die im Sichtfeld erscheinen, diejenigen Zellen den Wettbewerb um die Aufmerksamkeit gewinnen, die von dem externen Signal stimuliert wurden, die also das erwartete Merkmal bzw. den erwarteten räumlichen Bereich repräsentieren. Andere Zellen verlieren an Aufmerksamkeit und werden unterdrückt [Duncan, J. and Humphreys, G. (1989). "Visual search and stimulus similarity". Psychological Review, 96, 433-458; Desimone, R. and Duncan, J. (1995). "Neural mechanisms of selective visual attention". Annual Review of Neuroscience, 18, 193-222; Duncan, J. (1996). "Cooperating brain systems in selective perception an action". In Attention and Performance XVI, T. Inue and J. L. McClelland (Eds.), pp. 549-578. Cambridge: MIT Press]. Ein solcher externer Bias kann damit bestimmen, ob eine Objekterkennung ("what"-Frage) oder eine Templatesuche ("where"-Frage) durchgeführt wird. Beide Vorgänge können mit demselben Verfahren bzw. Modell durchgeführt werden.

Die Aufgabe wird ferner durch ein Computerprogramm gelöst, das bei Ablauf auf einem Computer das erfindungsgemäße Verfahren ausführt, sowie durch ein Computerprogramm mit Programmcode-Mitteln, um alle erfindungsgemäßen Schritte durchzuführen, wenn das Programm auf einem Computer ausgeführt wird.

Ferner wird die Aufgabe durch ein Neurodynamisches Modell der Verarbeitung visueller In-formationen gelöst, das in der Lage ist, das erfindungsgemäße Verfahren auszuführen. Dazu weist das Modell eine Mehrzahl von Arealen auf, deren Funktionen mit den Funktionen der Areale des dorsalen und ventralen Pfads des visuellen Kortex des menschlichen Gehirns identifiziert werden können. Zwischen verschiedenen Arealen ist eine Rückkopplung während der Verarbeitung vorgesehen. Ferner ist ein Wettbewerb um die Aufmerksamkeit zwischen verschiedenen Merkmalen und/oder verschiedenen räumlichen Bereichen im Modell vorgesehen.

Ebenso wird die Aufgabe der Erfindung durch eine Anordnung gelöst, die Mittel zum Durchführen eines Wettbewerbs um die Aufmerksamkeit zwischen verschiedenen Merkmalen und/oder verschiedenen räumlichen Bereichen der visuellen Informationen aufweist. Ferner eine Mehrzahl von Arealen, deren Funktionen mit den Funktionen der Areale des dorsalen und ventralen Pfads des visuellen Kortex des menschlichen Gehirns identifiziert werden können;, sowie Mittel zum Durchführen einer Rückkopplung zwischen verschiedenen Arealen während der Verarbeitung.

Außerdem wird die Aufgabe der Erfindung gelöst durch ein Computerprogramm mit Programmcode-Mitteln, um alle Schritte des erfindungsgemäßen Verfahrens durchzuführen, wenn das Programm auf einem Computer ausgeführt wird.

Schließlich wird die Aufgabe der Erfindung gelöst durch einen Datenträger, auf dem eine Datenstruktur gespeichert ist, die nach einem Laden in einen Hauptspeicher eines Computers das erfindungsgemäße Verfahren ausführt.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

Fig. 1    vereinfacht die wesentlichen Areale des visuellen Kortex des Gehirns;

Fig. 2    eine abstrakte Wiedergabe der Areale des Gehirns und ihrer synaptischen Verbindungen; und

Fig. 3    schematisch die Wechselwirkung zwischen einem Areal und einem zugehörigen inhibitorischen Pool.

Das Ziel der Modellierungen ist ein detailliertes neuronales Netzwerkmodell der Areale des Gehirns, das die realen Gegebenheiten im Gehirn bei Aktivierungsprozessen widerspiegelt, insbesondere hinsichtlich der visuellen Aufmerksamkeitssteuerung, und damit eine Nachbildung dieser Prozesse für die Bildverarbeitung erlaubt.

Für die Modellierung dieses Top-down-Approachs wird ein so genannter Neurosimulator der dritten Generation verwendet. Als Neurosimulatoren der dritten Generation bezeichnet man hierarchische Modelle der Organisation der Neuronen in Pools und der Pools in Areale, entsprechend den Arealen des Gehirns, wie es im Folgenden am Beispiel des visuellen Kortex beschrieben wird. Dabei umfasst ein Pool Tausende von Neuronen.

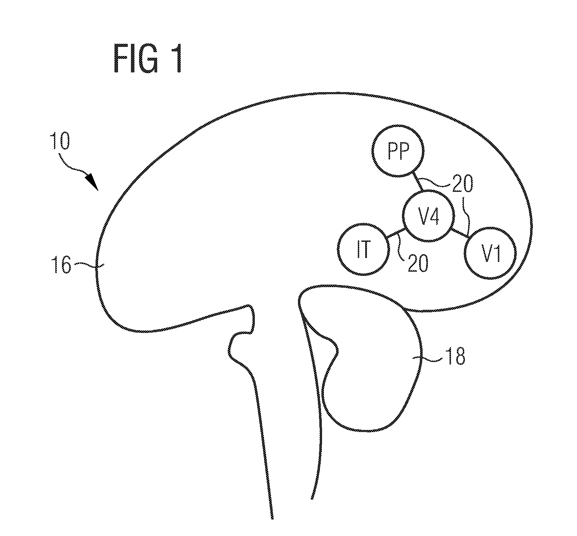

Fig. 1 zeigt vereinfacht die wesentlichen Areale des visuellen Kortex des Gehirns 10. Abgebildet ist das Großhirn 16 und das Kleinhirn 18. Im Großhirn 16 finden sich im visuellen Kortex neben anderen die dargestellten und weiter unten genauer erklärten Areale V1, V4, PP und IT. Zwischen diesen Arealen bestehen vielsträngige synaptische Verbindungen 20.

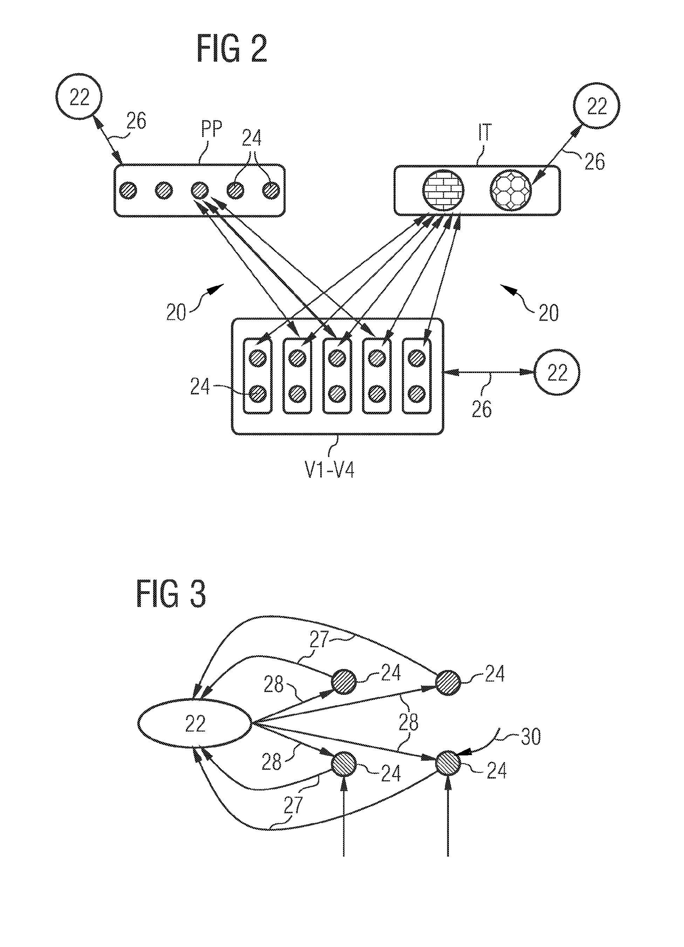

Der Aufbau des mathematischen Modells wird nun im Detail mit Bezug auf Fig. 2 beschrieben, die eine abstrakte Wiedergabe der Verhältnisse im Gehirn darstellt.

Das Areal IT (inferotemporal) dient zur Bilderkennung bzw. Objekterkennung innerhalb eines Bildes ("what"-Frage). In ihm sind Bildmuster gespeichert, die Repräsentationen von Objekten der sichtbaren Welt entsprechen können. Beispielhaft gezeigt sind zwei Muster, Backsteine bzw. Waben. Ein Muster ist erkannt, wenn ein dem Muster zugeordnetes sog. "Großmutter-Neuron" maximal aktiv wird. Die Fähigkeit des "Großmutter-Neurons", ein bestimmtes Muster zu erkennen, wird durch Training erworben. Das Training wird weiter unten geschildert. Im vorliegenden Modell wird zur Mustererkennung nicht mit "Großmutter-Neuronen" gearbeitet, sondern mit der kleinsten Einheit des Modells: dem Pool. Ein Muster wird also von einem "Großmutter-Pool" erkannt, wenn der entsprechende Großmutter-Pool maximal aktiv ist. Dementsprechend enthält das Areal IT im vorliegenden Modell ebenso viele Pools wie es zu erkennende Muster bzw. Objekte gibt.

Das Areal PP (posterior parietal) dient der örtlichen Lokalisierung von bekannten Mustern ("where"-Frage). Das Areal PP enthält im vorliegenden Modell daher ebenso viele Pools 24 wie es Pixel im zu erkennenden Bild gibt. Die Konzentration neuronaler Aktivität in einer kleinen Anzahl benachbarter Pools in PP entspricht einer Lokalisierung des Objekts.

Allgemein entspricht die Konzentration neuronaler Aktivität in einem oder einigen Pools einer erhöhten Aufmerksamkeit für die durch diese Pools repräsentierten Merkmale bzw. einer Identifizierung dieser Merkmale.

Die Areale V1 und V4 werden im vorliegenden Modell zu dem Areal V1-V4 zusammengefasst, das auch mit V4 bezeichnet wird. Dieses Areal ist allgemein zuständig für die Extraktion von Merkmalen. Es enthält etwa 1 Mio. Pools 24, für jedes Merkmal ein Pool. Die Pools 24 sprechen auf einzelne Merkmale des Bildes an. Die Merkmale des Bildes ergeben sich aus einer Wavelet-Transformation des Bildes (siehe unten). Ein Merkmal ist damit durch eine bestimmte Größe bzw. räumliche Frequenz, eine räumliche Orientierung und eine bestimmte Lage in x- und y-Richtung definiert (siehe unten). Alle aufgenommenen Bilddaten gelangen zunächst in das Areal V1-V4.

Hinzu kommt zu jedem Areal mindestens ein inhibitorischer Pool (inhibitory Pool) 22, also ein Pool, der eine hemmende Wirkung auf die Aktivität anderer Pools ausübt. Die inhibitorischen Pools sind durch bidirektionale Verbindungen 26 mit den anregbaren Pools 24 gekoppelt. Durch die inhibitorischen Pools 22 kommt es zu kompetitiver Interaktion bzw. Wettbewerb um die Aufmerksamkeit zwischen den Pools. Der Wettbewerb in V1-V4 wird mit Pools 24 durchgeführt, die sowohl Orts- als auch Objektinformationen kodieren. PP abstrahiert Ortsinformationen und vermittelt einen Wettbewerb auf der räumlichen Ebene, also der Templatesuche. IT abstrahiert Informationen von Klassen von Objekten und vermittelt einen Wettbewerb auf der Ebene der Klassen von Objekten, also der Objekterkennung.

Zwischen den Arealen bestehen synaptische Verbindungen 20, durch die die Pools 24 zu Aktivität angeregt werden können. Das Areal IT ist mit dem Areal V1-V4 verbunden; das Areal PP mit Areal V1-V4. Die im Modell simulierten synaptischen Verbindungen 20 zwischen den Arealen spiegeln den "what"- und den "where"-Pfad der visuellen Verarbeitung wieder. Der "what"-Pfad verbindet das Areal V1-V4 mit dem Areal IT für die Objekterkennung. Der "where"-Pfad verbindet das Areal V1-V4 mit dem Areal PP für die örtliche Lokalisierung. Die Areale IT und PP sind untereinander nicht verbunden.

Die synaptischen Verbindungen 20 sind stets bidirektional, d. h. die Daten aus V1-V4 werden in PP oder IT weiter verarbeitet. Gleichzeitig werden aber auch Ergebnisse aus PP oder IT in V1-V4 zurück gekoppelt, um den Wettbewerb um die Aufmerksamkeit zu steuern.

Die Aktivitäten der neuronalen Pools werden unter Verwendung der Mean-Field-Näherung modelliert. Viele Bereiche des Gehirns organisieren Gruppen von Neuronen mit ähnlichen Eigenschaften in Spalten oder Feldzusammenstellungen, wie beispielsweise Orientierungsspalten im primären visuellen Kortex und im somatosensorischen Kortex. Diese Gruppen von Neuronen, Pools genannt, sind aus einer großen und homogenen Population von Neuronen zusammengesetzt, die eine ähnliche externe Eingabe empfangen, gegenseitig verkoppelt sind und wahrscheinlich zusammen als eine Einheit fungieren. Diese Pools können eine robustere Verarbeitungs- und Kodierungseinheit bilden als ein einzelnes Neuron, weil ihre momentane Populationsmittelwertantwort, im Gegensatz zum zeitlichen Mittel eines relativ stochastischen Neurons in einem vorgegebenen Zeitfenster, besser an die Analyse von schnellen Wechseln in der realen Welt angepasst ist.

Die Aktivität der Pools der Neuronen wird mit Hilfe der Mean-Field-Näherung beschrieben. Dabei wird die Puls-Aktivität eines Pools durch einen Ensemble-Mittelwert x der Pulsrate aller Neuronen des Pools ausgedrückt. Diese mittlere Aktivität x des Pools ergibt sich durch die Anregung der Neuronen des Pools durch einen Eingangs-Pulsstrom I allgemein ausgedrückt aus:

$$x(t) = F(I(t)). \tag{1}$$

Dabei ist F eine reelle Funktion. Für gepulste Neuronen vom Typ "integriere und feure" (integrate-and-fire), die deterministisch auf den Eingangsstrom I reagieren, gilt in adiabatischer Näherung [Usher, M. und Niebur, E.: "Modelling the temporal dynamics of IT neurons in visual search: A mechanism of top-down selective attention", Journal of Cognitive Neuroscience, 1996, Seiten 311-327]:

$$F(I(t)) = \frac{1}{T_{refractory} - \tau \log(1 - \frac{1}{\tau I(t)})}, \tag{2}$$

wobei $T_{refractory}$ die Totzeit eines Neurons nach Aussenden eines

Pulses angibt (etwa 1 ms) und τ die Latenz der Membran des Neurons, also die Zeit zwischen einem externen Input und der vollständigen Polarisierung der Membran [Usher, M. und Niebur, E.: "Modelling the temporal dynamics of IT neurons in visual search: A mechanism of top-down selective attention", Journal of Cognitive Neuroscience, 1996, Seiten 311-327]. Ein typischer Wert für τ ist 7 ms.

Die Aktivität eines isolierten Pools von Neuronen kann außer durch die mittlere Aktivität x auch durch die Stärke des zwischen den Neuronen fließenden Eingangsstroms I charakterisiert werden. Dieser entwickelt sich zeitlich gemäß der folgenden Gleichung:

$$\tau \frac{\partial}{\partial t} I(t) = -I(t) + \tilde{q} F(I(t)) \quad . \tag{3}$$

Dabei beschreibt der erste Term auf der rechten Seite das Abklingen der Aktivität und der zweite Term auf der rechten Seite die Selbsterregung zwischen den Neuronen innerhalb des Pools, also die kooperative, erregende Interaktion innerhalb des Pools. $\tilde{q}$ parametrisiert die Stärke der Selbsterregung. Typische Werte für $\tilde{q}$ liegen zwischen 0,8 und 0,95.

Die unmittelbar aufgenommenen Bilder seien kodiert in einem Grauwertbild, das durch eine nxn-Matrix $\Gamma_{ij}^{orig}$ beschrieben wird. Eine nicht-quadratische Matrix ist ebenfalls möglich. Üblicherweise wird jedoch mit einer 64x64-Matrix gearbeitet, d. h. n = 64. Dabei bezeichnen die Indizes i und j die räumliche Position des Pixels. Der Grauwert $\Gamma_{ij}^{orig}$ innerhalb jedes

Pixels ist vorzugsweise durch 8 Bit kodiert. Dabei entspricht der Bitwert 0 der Farbe Schwarz und der Bitwert 255 der Farbe Weiß. Im allgemeinen können auch farbige Bilder von höherer Dynamik verarbeitet werden.

Im ersten Verarbeitungsschritt wird der konstante Anteil des Bildes subtrahiert. Dies erfolgt im Gehirn vermutlich im sog. LGN (lateral geniculate nucleus) des Thalamus. Durch Subtraktion des Mittelwerts erhält man die nxn-Bildmatrix $\Gamma_{ij}$:

$$\Gamma_{ij} = \Gamma_{ij}^{orig} - \frac{1}{n^2} \sum_{i=1}^{n} \sum_{j=1}^{n} \Gamma_{ij}^{orig} \quad . \tag{4}$$

Die Extraktion von Merkmalen aus dem Bild durch die Pools im Areal V1-V4 erfolgt modellgemäß in der Weise, dass die Pools eine Gabor-Wavelet-Transformation des Bildes durchführen, genauer, dass die Aktivität der Pools den Koeffizienten einer Gabor-Wavelet-Transformation entspricht.

Die für die Gabor-Wavelet-Transformation verwendeten Funktionen $G_{kqpl}$ sind Funktionen des Ortes x und y bzw. der diskreten Indizes i und j und sind definiert durch

$$G_{kpql}(x,y) = a^{-k}\Psi_{\theta_l}(a^{-k}x\text{-}pb, a^{-k}y\text{-}qb), \tag{5}$$

dabei wird b meistens zu 1 gewählt. Ferner ist

$$\psi_{\theta_l}(u,v) = \psi(u\cos(l\theta_0) + v\sin(l\theta_0) + u\sin(l\theta_0) + v\cos(l\theta_0)). \tag{6}$$

Das Grund-Wavelet $\psi(x,y)$ ist definiert durch das Produkt einer elliptischen Gauß-Funktion und einer komplexen ebenen Welle:

$$\psi(r,s) = \frac{1}{\sqrt{2\pi}} e^{-\frac{1}{8}\left(4r^2 + s^2\right)} \cdot \left[ e^{i\kappa r} - e^{-\frac{\kappa^2}{2}} \right]. \tag{7}$$

Vorzugsweise wird $\kappa=\pi$ gewählt.

Die Gabor-Wavelet-Funktionen besitzen somit vier Freiheitsgrade: k, l, p und q.

k entspricht der Größe des Merkmals, ausgedrückt durch die Oktave k, also die räumliche Frequenz, ermittelt durch das a^k-fache der Grundfrequenz, die durch den Parameter a skaliert wird; für a wird in der Regel der Wert 2 gewählt. Vorzugsweise werden die drei Oktaven k = 1, 2 und 3 betrachtet.

l entspricht der Winkelorientierung, ausgedrückt durch $\theta_l = l \cdot \theta_0$. $\theta_l$ ist also ein Vielfaches der Winkel-Schrittweite $\theta_0 = \pi/L$, also der Orientierungsauflösung. Für L werden vorzugsweise Werte von 2 bis 10 gewählt, meistens 8.

p und q bestimmen die räumliche Lage des Mittelpunkts m der Funktion in x- und y-Richtung, ausgedrückt durch

$$m = (m_x, m_y) = (pba^k, qba^k). \tag{8}$$

Demnach wird die Aktivität $I^{V4}_{kpql}$ eines Pools im Areal V1-V4, der auf die räumliche Frequenz bei der Oktave k, der räumlichen Orientierung mit dem Index l und auf einen Anreiz anspricht, dessen Zentrum durch p und q bestimmt ist, angeregt durch $I^{V4,E}_{kpql}$ mit:

$$I^{V4,E}_{kpql} := \sqrt{\left\| \left\langle G_{kpql}, \Gamma \right\rangle \right\|^2} := \sqrt{\left\| \sum_{i=1}^{n} \sum_{j=1}^{n} G_{kpql}(i,j)\Gamma_{ij} \right\|^2}. \tag{9}$$

Dies entspricht modellgemäß eben den Koeffizienten der Gabor-Wavelet-Transformation. Die $I^{V4,E}_{kpql}$ werden vorzugsweise auf einen maximalen Sättigungswert von 0,025 normiert. Das jeweilige Verhalten der Pools wird im Wege eines vorherigen Trainings festgelegt (siehe unten).

Betrachten wird nun die neurodynamischen Gleichungen, die die zeitliche Entwicklung des Systems bzw. Modells der Bildverarbeitung bestimmen.

Die Aktivität $I^{V4}_{kpql}$ eines Pools im Areal V1-V4 mit Eigenschaften, die durch die oben beschriebenen Parameter k, p, q und l beschrieben werden, entwickelt sich in Weiterführung der Gleichung (3) durch die inhibitorischen und erregenden Eingangsströme in der Zeit gemäß

$$\tau \frac{\partial}{\partial t} I^{V4}_{kpql} = -I^{V4}_{kpql} + \tilde{q}F(I^{V4}_{kpql}) - \tilde{b}F(I^{V4,I}_{k}) + I^{V4,E}_{kpql} + I^{V4-PP}_{pq} + I^{V4-IT}_{kpql} + I_0 + \nu. \tag{10}$$

Die ersten beiden Terme auf der rechten Seite wurden weiter oben erläutert. Sie stellen das natürliche Abklingen der Aktivität bzw. die Selbsterregung innerhalb des Pools dar.

Der dritte Term auf der rechten Seite der Gleichung (10), $bF(I_k^{V4,I})$, beschreibt die oben erwähnte inhibitorische Wirkung des inhibitorischen Pools 22, die weiter unten näher beschrieben wird. Der Parameter $\tilde{b}$ auf der rechten Seite der Gleichung (10) skaliert die Stärke der Inhibition. Ein typischer Wert für $\tilde{b}$ ist 0,8.

Der vierte Term auf der rechten Seite der Gleichung (10), $I_{kpql}^{V4,E}$, beschreibt die Anregung durch das aufgenommene Bild gemäß der Gabor-Wavelet-Transformation nach Gleichung (9).

Der fünfte Term auf der rechten Seite der Gleichung (10), $I_{-PPpq}^{V4}$, beschreibt die Aufmerksamkeitssteuerung für ein Merkmal mit der räumlichen Lage entsprechend p und q, also die Betonung der "where"-Frage, wie es weiter unten näher erläutert wird.

Der sechste Term auf der rechten Seite der Gleichung (10), $I_{kpql}^{V4-IT}$, beschreibt die Aufmerksamkeitssteuerung in V1-V4 für bestimmte Muster aus IT, also die Betonung der "what"-Frage, wie es weiter unten näher erläutert wird.

Der siebte Term auf der rechten Seite der Gleichung (10), $I_0$, beschreibt eine diffuse spontane Hintergrundeingabe. Ein typischer Werte für $I_0$ ist 0,025. $\nu$ steht für ein stochastisches Rauschen der Aktivität. Es ist der Einfachheit halber für alle Pools als gleichstark angenommen. Ein typischer Mittelwert für $\nu$ ist Null, bei einer Gaußschen Verteilung mit einer Standardabweichung zwischen 0,01 und 0,02.

Der dritte Term auf der rechten Seite der Gleichung (10), $bF(I_k^{V4,I})$, beschreibt, wie oben erwähnt, die inhibitorische Wirkung des inhibitorischen Pools 22 zum Areal V1-V4. Im Folgenden wird auf Fig. 3 Bezug genommen. Die Pools 24 innerhalb eines Areals stehen im Wettbewerb zueinander, was durch einen inhibitorischen Pool 22 vermittelt wird, der die erregende Eingabe 27 von allen erregbaren Pools 24 empfängt und ein gleichförmiges hemmendes Feedback 28 an alle erregbaren Pools 24 leitet. Dieses hemmende Feedback 28 wirkt auf weniger aktive Pools stärker als auf aktivere. Dadurch können sich stärker aktive Pools gegen schwächer aktive Pools durchsetzen.

Zusätzlich ist in Fig. 3 ein externer Eingangsstrom 30 (Bias) gezeigt, der ein oder mehrere Pools anregen kann. Die genaue Funktion des Bias 30 wird weiter unten im Zusammenhang mit Gleichung (15) geschildert.

Die Aktivitäten $I_k^{V4,I}$ innerhalb des inhibitorischen Pools genügen der Gleichung:

$$\tau \frac{\partial}{\partial t} I_k^{V4,I}(t) = -I_k^{V4,I}(t) + \tilde{c} \sum_{pql} F\left(I_{kpql}^{V4}(t)\right) - dF\left(I_k^{V4,I}(t)\right). \qquad (11)$$

Der erste Term auf der rechten Seite der Gleichung (11) beschreibt wiederum das Abklingen des inhibitorischen Pools 22. Der zweite Term beschreibt den Eingangsstrom aus V1-V4 in den zu V1-V4 gehörigen inhibitorischen Pool 22 mit dem Index k, skaliert durch den Parameter c. Ein typischer Wert für $\tilde{c}$ ist 0,1.

Der dritte Term stellt eine Selbsthemmung des zu V1-V4 gehörigen inhibitorischen Pools 22 mit dem Index k dar. Ein typischer Wert für d ist 0,1.

Die inhibitorische Wirkung innerhalb von V1-V4 wirkt erfahrungsgemäß allein innerhalb einer räumlichen Struktur einer vorgegebenen Größe, ausgedrückt durch die Oktave k. Innerhalb der Struktur der Größe k kommt es zu Wettbewerb zwischen den Orten p und q und der Orientierung l, vermittelt durch die Summe

$$\sum_{pql} F\left(I_{kpql}^{V4}(t)\right).$$

Jedes Indextripel (p, q, l) hemmt alle anderen Indextripel (p, q, l). Räumliche Strukturen unterschiedlicher Größe k, d. h. unterschiedlicher räumlicher Frequenzen k, beeinflussen sich nicht, da die inhibitorische Wirkung in Gleichung (10), $-bF(I_k^{V4,I})$, nur auf k selbst zurückwirkt.

Die Wirkung des inhibitorischen Pools 22 lässt sich qualitativ wie folgt verstehen: je mehr Pools im Areal V1-V4 aktiv sind, desto aktiver wird der inhibitorische Pool 22 sein. Dadurch wird auch das inhibitorische Feedback stärker, das die Pools im Areal V1-V4 erfahren. Nur die aktivsten Pools im Areal V1-V4 werden daher den Wettbewerb überstehen.

Der fünfte Term auf der rechten Seite der Gleichung (10), $I_{pq}^{V4-PP}$, beschreibt, wie erwähnt, die Aufmerksamkeitssteuerung für ein Merkmal mit der räumlichen Lage entsprechend p und q, also die Betonung der "where"-Frage. Die Aufmerksamkeitssteuerung erfolgt durch eine Rückkopplung der Aktivität der Pools mit Indizes i und j nahe bei den Werten p und q aus dem Areal PP auf alle Pools mit den Indizes p und q in das Areal V1-V4. Diese Rückkopplung wird modelliert durch

$$I_{pq}^{V4-PP} = \sum_{i=1}^{n} \sum_{j=1}^{n} W_{pqij} F\left(I_{ij}^{PP}\right) \tag{12}$$

wobei die Koeffizienten $W_{pqij}$ ihrerseits ermittelt werden aus einer Gauß-Funktion:

$$W_{pqij} = Ae^{\frac{\text{dist}^2((p,q),(i,j))}{2S^2}} - B \tag{13}$$

mit der Kopplungskonstante A (typischer Wert 1,5), mit dem räumlichen Skalierungsfaktor S, der die Reichweite des räumlichen Einflusses eines Merkmals festlegt (typischerweise ist S = 2), und mit der Entfernungsfunktion dist(p, q, i, j), die die Entfernung zwischen dem Ort mit den Indizes i, j und dem durch die Indizes p, q festgelegten Mittelpunkt der Gabor-Wavelet-Funktion berechnet. Vorzugsweise wird hier die Euklidische Metrik genommen:

$$dist^2\left((p,q),(i,j)\right) = (p\text{-}i)^2 + (q\text{-}j)^2, \tag{14}$$

Zusätzlich gibt es eine negative Verbindung B zur Umgebung, was zu einer Überbetonung von benachbarten Merkmalen und einer Abwertung weiter entfernter Merkmale führt. Ein typischer Wert für B ist 0,1.

Im Effekt regen die Pools mit der räumlichen Lage entsprechend p und q die entsprechenden Pools in V1-V4 nicht unmittelbar an, sondern erst nach Durchführung einer Faltung mit einem Gaußschen Kernel. Mit anderen Worten: V1-V4 und PP sind mit symmetrischen, lokalisierten Verbindungen verbunden, die durch Gaußsche Gewichte modelliert werden.

Die zeitliche Entwicklung der Aktivität $I_{ij}^{PP}$ der Pools im Areal PP ist gegeben durch

$$\tau \frac{\partial}{\partial t} I_{ij}^{PP} = -I_{ij}^{PP} + \tilde{q} F(I_{ij}^{PP}) - \tilde{b} F(I^{PP,I}) + I_{ij}^{PP-V4} + I_{ij}^{PP,A} + I_0 + \nu \ . \tag{15}$$

Die Gleichung entspricht im ersten, zweiten, sechsten und siebten Term der Gleichung (10), jedoch für das Areal PP.

Der dritte Term auf der rechten Seite beschreibt wiederum die inhibitorische Wirkung des gemeinsamen inhibitorischen Pools I zum Areal PP. Dessen Aktivität $I^{PP,I}$ genügt der Gleichung

$$\tau \frac{\partial}{\partial t} I^{PP,I} = -I^{PP,I} + \tilde{c} \sum_{i,j} F\left(I_{ij}^{PP}\right) - d F\left(I^{PP,I}\right) . \tag{16}$$

Diese Gleichung entspricht in ihrer Struktur der bereits beschriebenen Gleichung (11). Es gibt für das Areal PP nur eine einheitliche inhibitorische Wirkung.

Der vierte Term auf der rechten Seite der Gleichung (15) beschreibt wiederum die aufmerksamkeitssteuernde Rückkopplung von V1-V4 nach PP und ist gegeben durch

$$I_{ij}^{PP-V4} = \sum_{k,p,q,l} W_{pqij} F\left(I_{kpql}^{V4}\right), \tag{17}$$

wobei die $W_{pqij}$ oben im Zusammenhang mit Gleichung (13) definiert wurden. Die synaptischen Verbindungen 20 zwischen V1-V4 und PP sind also symmetrisch ausgebildet. V1-V4 steuert in PP somit die Aufmerksamkeit hinsichtlich bestimmter Orte ("where"-Frage).

Der fünfte Term $I_{ij}^{PP,A}$ auf der rechten Seite der Gleichung (15) ist ein externer, die Aufmerksamkeit auf einen bestimmten Ort (i, j) richtender Top-Down-Bias, der zur "biased competition" führt. Dieser ist in Fig. 3 durch den Pfeil 30 repräsentiert. Bei Voreinstellung des Bias wird ein Objekt an dem voreingestellten Ort erwartet. Es kommt dann zu einer Erkennung ("what") eines Objekts an dem erwarteten Ort. Der Bias auf einen bestimmten Ort führt somit zur Beantwortung der "what"-Frage. Ein typischer Wert für diesen externen Bias ist 0,07 für den erwarteten Ort und 0 für alle anderen Orte.

Der sechste Term auf der rechten Seite der Gleichung (10), $I_{kpql}^{V4-IT}$, beschreibt - wie erwähnt - die Aufmerksamkeitssteuerung in V1-V4 für bestimmte Muster aus IT, also die Betonung der "what"-Frage. Die Aufmerksamkeitssteuerung erfolgt durch eine Rückkopplung einer Aktivität $I_c^{IT}$ der Pools, die für das Muster c stehen, aus dem Areal IT auf zugehörige Pools im Areal V1-V4. Diese Rückkopplung wird modelliert durch

$$I_{kpql}^{V4-IT} = \sum_c w_{ckpql} F\left(I_c^{IT}\right).\qquad(18)$$

Die Bestimmung der Gewichte $w_{ckpql}$ der Eingangsströme von IT in V1-V4 und damit der zum Muster c gehörigen Pools im Areal V1-V4
wird weiter unten erläutert.

$I_c^{IT}$ ist die Aktivität eines Pools, der im Areal IT für das Muster c steht. Die zeitliche Entwicklung von $I_c^{IT}$ folgt der Differentialgleichung:

$$\tau \frac{\partial}{\partial t} I_c^{IT} = -I_c^{IT} + \tilde{q} F(I_c^{IT}) - \tilde{b} F(I^{IT,I}) + I_c^{IT-V4} + I_c^{IT,A} + I_0 + \nu \ .\qquad(19)$$

Die Gleichung entspricht im ersten, zweiten, sechsten und siebten Term den Gleichungen (10) und (15), jedoch für das Areal IT.

Der dritte Term auf der rechten Seite der Gleichung (19), $-bF(I^{IT,I})$, beschreibt wiederum die inhibitorische Wirkung des inhibitorischen Pools 22 zum Muster c des Areals IT. Die Aktivität $I^{IT,I}$ des inhibitorischen Pools zum Areal IT genügt der Gleichung

$$\tau \frac{\partial}{\partial t} I^{IT,I} = -I^{IT,I} + \tilde{c} \sum_c F\left(I_c^{IT}\right) - d F\left(I^{IT,I}\right).\qquad(20)$$

Diese Gleichung entspricht in ihrer Struktur den bereits beschriebenen Gleichungen (11) und (16). Es gibt für das Areal IT nur eine einheitliche inhibitorische Wirkung, die den Wettbewerb um die Aufmerksamkeit zwischen den einzelnen Mustern c bewirkt.

Der vierte Term auf der rechten Seite der Gleichung (19), $I_c^{IT-V4}$, beschreibt wiederum die aufmerksamkeitssteuernde Rückkopplung von V1-V4 nach IT und ist gegeben durch

$$I_c^{IT-V4} = \sum_{k,p,q,l} w_{ckpql} F\left(I_{kpql}^{V4}\right),\qquad(21)$$

wobei die $w_{ckpql}$ bereits in Gleichung (18) auftraten und weiter unten näher erläutert werden. Die synaptischen Verbindungen 20 zwischen V1-V4 und IT sind also symmetrisch ausgebildet. V1-V4 steuert in IT somit die Aufmerksamkeit hinsichtlich bestimmter Muster ("what"-Frage).

Der fünfte Term auf der rechten Seite der Gleichung (19), $I_c^{IT,A}$, ist wiederum ein externer, die Aufmerksamkeit auf ein bestimmtes Muster c richtender Top-down-Bias. Bei Voreinstellung des Bias wird ein bestimmtes Muster c bzw. Objekt c erwartet. Es kommt dann zu einer Suche des Orts, an dem sich das erwartete Objekt befindet ("where"). Der Bias auf ein bestimmtes Objekt oder Muster führt also zur Beantwortung der "where"-Frage. Ein typischer Wert für diesen externen Bias ist 0,07 für das erwartete Muster und 0 für alle anderen Muster.

Das System der angegebenen Differentialgleichungen ist hoch parallel. Es besteht aus etwa 1,2 Mio. gekoppelten Differentialgleichungen. Diese werden iterativ numerisch gelöst, vorzugsweise mittels Diskretisierung unter Zuhilfenahme des Euler- oder Runge-Kutta-Verfahrens. Als zeitliche Schrittweite wird vorzugsweise 1 ms gewählt, also etwa $T_{refractory}$ gemäß Gleichung (2).

Die Gewichte $w_{ckpql}$ der synaptischen Verbindungen zwischen V1-V4 und IT werden durch Hebbsches Lernen (Hebbian Training) [Deco, G. und Obradovic, D.: "An Information-theoretic Approach to Neurocomputing", Springer Verlag (1996)] mit bekannten Objekten ausgebildet. Dazu werden dem neuronalen Netz nacheinander Muster c an zufällig gewählten Orten (i, j) präsentiert. Durch die zufällige Wahl des Orts, an dem das Muster präsentiert wird, wird eine Translationsinvariante Objekterkennung gewährleistet. Während der Präsentation des Musters c am Ort (i, j) werden die zu c und (i, j) gehörigen externen Biasse $I_c^{IT,A}$ und $I_{ij}^{PP,A}$ aktiviert.

Als Ausgangswerte für die Gewichte $w_{ckpql}$ können dabei die oben beschriebenen Werte der Gabor-Wavelet-Transformation der in IT gespeicherten Muster c verwendet werden.

Nach Präsentation eines Musters c an einem Ort (i, j) und Eingabe der externen Biasse wird die dynamische Entwicklung des Gleichungssystems bis zur Konvergenz abgewartet. Anschließend werden die $w_{ckpql}$ durch die Hebbsche Regel

$$w_{ckpql} \to w_{ckpql} + \eta F(I_c^{IT})F(I_{kpql}^{V4}), \qquad (22)$$

iteriert, wobei die Werte der Variablen nach der Konvergenz verwendet werden. $\eta$ ist der sog. Lernkoeffizient. Typische Werte für $\eta$ liegen zwischen etwa 0.01 und 1, vorzugsweise 0.1.

Die Iteration wird für das Objekt bzw. Muster c und die räumliche Anordnung (i, j) solange wiederholt, bis die Gewichte $w_{ckpql}$ konvergieren.

Dieser Vorgang wird für alle Objekte bzw. Muster und alle möglichen räumlichen Anordnungen wiederholt. Dies ergibt oft Millionen von Präsentationen bzw. Iterationen.

Mit Hilfe des geschilderten neuronalen Netzes konnten experimentelle Daten [Kaster, S.; De Weerd, P.; Desimone, R. and Ungerleider, L.: "Mechanisms of directed attention in the human extrastriate cortex as revealed by functional MRI"; Science 282 (1998) 108-111. Kaster, S.; Pinsk, M.; De Weerd, P.; Desimone, R. and Ungerleider, L.: "Increased activity in human visual cortex during directed attention in the absence of visual stimulation"; Neuron 22 (1999) 751-761.] quantitativ nachvollzogen werden. Die Dynamik der Aktivität der Pools in V1-V4 mit deutlichen Änderungen auf der Skala unterhalb einer Sekunde zeigt sich im Modell wie im Experiment. Gleiches gilt für die Aufmerksamkeitssteuerung durch Erwartung und die inhibitorische Wirkung von gleichzeitigen oder benachbarten Stimuli.

Das Modell hat sich ferner als konsistent erwiesenen mit den Messungen der Aktivität einzelner Zellen im visuellen Kortex [Moran, J. und Desimone, R. (1985). "Selective attention gates visual processing in the extrastriate cortex". Science, 229, 782-784; Spitzer, H., Desimone, R. and Moran, J. (1988). "Increased attention enhances both behavioral and neuronal performance". Science, 240, 338-340; Sato, T. (1989). "Interactions of visual stimuli in the receptive fields of inferior temporal neurons in awake ma-caques". Experimental Brain Research, 77, 23-30; Motter, B. (1993). "Focal attention produces spatially selec-tive processing in visual cortical areas V1, V2 and V4 in the presence of competing stimuli". Journal of Neurophysiology, 70, 909-919; Miller, E., Gochin, P. and Gross, C. (1993). "Supression of visual responses of neurons in inferior temporal cortex of the awake macaque by addition of a second stimulus". Brain Research, 616, 25-29; Chelazzi, L., Miller, E. Duncan, J. and Desimone, R. (1993). "A neural basis for visual search in inferior temporal cortex". Nature (London), 363, 345-347; Reynolds, J., Chelazzi, L. and Desimone, R. (1999). "Competi-tive mechanisms subserve attention in macaque areas V2 and V4". Journal of Neuroscience, 19, 1736-1753].

Bei dem neuen Top-down-Approach wird das gesamte Bild parallel verarbeitet. Die gesuchten Merkmale emergieren im Laufe der Verarbeitung, d. h. sie stechen nach einer Weile hervor, indem z. B. diejenigen "Großmutter-Pools" aktiv werden, die den Wettbewerb zwischen den einzelnen Pools bzw. Merkmalen gewonnen haben. Die "what"- und die "where"-Frage werden mit ein und demselben Modell beantwortet. Lediglich der so genannte Input-Bias wird verändert, d. h die Aufmerksamkeit wird in Richtung von "what" oder "where" verschoben. Es wird mittels des Bias eine Erwartungshaltung erzeugt.

Mit Hilfe des geschilderten Modells ist es möglich, Bilder auszuwerten in einer Weise, die der Bildverarbeitung des Menschen beim Sehvorgang nachgebildet ist.

Liste der zitierten Literatur:

Chelazzi, L., Miller, E. Duncan, J. and Desimone, R. (1993). "A neural basis for visual search in inferior temporal cortex". Nature (London), 363, 345-347

Deco, G. und Obradovic, D.: "An Information-theoretic Approach to Neurocomputing". Springer Verlag (1996)

Desimone, R. and Duncan, J. (1995). "Neural mechanisms of selective visual attention". Annual Review of Neuroscience, 18, 193-222

Duncan, J. (1996). "Cooperating brain systems in selective perception an action". In Attention and Performance XVI, T. Inui and J. L. McClelland (Eds.), pp. 549-578. Cambridge: MIT Press

Duncan, J. and Humphreys, G. (1989). "Visual search and stimulus similarity". Psychological Review, 96, 433-458

Kaster, S., De Weerd, P., Desimone, R. and Ungerleider, L.: "Mechanisms of directed attention in the human extrastriate cortex as revealed by functional MRI"; Science 282 (1998) 108-111

Kaster, S., Pinsk, M., De Weerd, P., Desimone, R. and Ungerleider, L.: "Increased activity in human visual cortex during directed attention in the absence of visual stimulation"; Neuron 22 (1999) 751-761

Miller, E., Gochin, P. and Gross, C. (1993). "Supression of visual responses of neurons in inferior temporal cortex of the awake macaque by addition of a second stimulus". Brain Research, 616, 25-29

Moran, J. und Desimone, R. (1985). "Selective attention gates visual processing in the extrastriate cortex". Science, 229, 782-784

Motter, B. (1993). "Focal attention produces spatially selective processing in visual cortical areas V1, V2 and V4 in the presence of competing stimuli". Journal of Neurophysiology, 70, 909-919

Reynolds, J., Chelazzi, L. and Desimone, R. (1999). "Competitive mechanisms subserve attention in macaque areas V2 and V4". Journal of Neuroscience, 19, 1736-1753

Sato, T. (1989). "Interactions of visual stimuli in the receptive fields of inferior temporal neurons in awake macaques". Experimental Brain Research, 77, 23-30

Spitzer, H., Desimone, R. and Moran, J. (1988). "Increased attention enhances both behavioral and neuronal performance". Science, 240, 338-340

Usher, M. und Niebur, E.: "Modelling the temporal dynamics of IT neurons in visual search: A mechanism of top-down selective attention", Journal of Cognitive Neuroscience, 1996, Seiten 311-327

Wojciulik, E., Kanwisher, N., und Driver, J. (1998). "Covert visual attention modulates face-specific activity in the human fusiform gyrus: fMRI study". Journal of Neurophysiology, 79, 1574-1578

**Patentansprüche**

1. Verfahren zum Verarbeiten visueller Informationen,

   a) wobei ein Wettbewerb um die Aufmerksamkeit zwischen verschiedenen Merkmalen und/oder verschiedenen räumlichen Bereichen der visuellen Informationen durchgeführt wird;
   b) wobei eine Mehrzahl von Arealen verwendet wird, deren Funktionen mit den Funktionen der Areale des dorsalen und ventralen Pfads des visuellen Kortex des menschlichen Gehirns identifiziert werden können; und
   c) wobei eine Rückkopplung zwischen verschiedenen Arealen während der Verarbeitung durchgeführt wird.

2. Verfahren nach dem vorhergehenden Anspruch,
   **dadurch gekennzeichnet,**
   **dass** jedes Areal als neuronales Netz modelliert wird, wo-bei jeweils eine Mehrzahl von Neuronen des neuronalen Netzes zu einem Pool zusammengefasst wird; und dass die Aktivität der Pools simuliert wird.

3. Verfahren nach dem vorhergehenden Anspruch,
   **dadurch gekennzeichnet,**
   **dass** die Aktivität der Pools durch ein mean-field-Modell beschrieben wird.

4. Verfahren nach einem der beiden vorhergehenden Ansprü-che,

**dadurch gekennzeichnet,**
**dass** die Pools miteinander im Wettbewerb um Aufmerksam-keit stehen; und
**dass** dieser Wettbewerb über mindestens einen inhibitori-schen Pool vermittelt wird, der eine hemmende Wirkung auf die Aktivität der Pools ausübt.

5. Verfahren nach einem der drei vorhergehenden Ansprü-che,
**dadurch gekennzeichnet,**
**dass** das neuronale Netz derart gestaltet wird, dass die Aufmerksamkeit für ein bestimmtes zu identifizierendes Objekt oder für ein bestimmtes zu lokalisierendes Objekt erhöht werden kann.

6. Verfahren nach einem der vorhergehenden Ansprüche,
**dadurch gekennzeichnet,**
**dass** ein Areal (IT) des neuronalen Netzes die Funktion hat, Objekte im Sehfeld zu identifizieren, indem Pools dieses Areals auf das Identifizieren jeweils spezifischer Objekte spezialisiert sind.

7. Verfahren nach einem der vorhergehenden Ansprüche,
**dadurch gekennzeichnet,**
**dass** ein Areal (PP) des neuronalen Netzes die Funktion hat, den Ort von erkennbaren Objekten im Sehfeld zu identifizieren, indem Pools dieses Areals auf das Lokalisieren von Objekten an spezifischen Orten im Sehfeld spezialisiert sind.

8. Neurodynamisches Modell der Verarbeitung visueller Informationen,

a) wobei das Modell eine Mehrzahl von Arealen aufweist, deren Funktionen mit den Funktionen der Areale des dorsalen und ventralen Pfads des visuellen Kortex des menschlichen Gehirns identifiziert werden können;
b) wobei eine Rückkopplung zwischen verschiedenen Arealen während der Verarbeitung vorgesehen ist; und
c) wobei ein Wettbewerb um die Aufmerksamkeit zwischen verschiedenen Merkmalen und/oder verschiedenen räumlichen Bereichen vorgesehen ist.

9. Anordnung zum Verarbeiten visueller Informationen

a) mit Mitteln zum Durchführen eines Wettbewerbs um die Aufmerksamkeit zwischen verschiedenen Merkmalen und/oder verschiedenen räumlichen Bereichen der visuellen Informationen;
b) mit einer Mehrzahl von Arealen, deren Funktionen mit den Funktionen der Areale des dorsalen und ventralen Pfads des visuellen Kortex des menschlichen Gehirns identifiziert werden können; und
c) mit Mitteln zum Durchführen einer Rückkopplung zwi-schen verschiedenen Arealen während der Verarbeitung.

10. Computerprogramm mit Programmcode-Mitteln, um alle Schritte gemäß einem der Ansprüche 1 bis 7 durchzuführen, wenn das Programm auf einem Computer ausgeführt wird.

11. Datenträger, auf dem eine Datenstruktur gespeichert ist, die nach einem Laden in einen Hauptspeicher eines Computers das Verfahren nach einem der Ansprüche 1 bis 7 ausführt.

FIG 1

FIG 2

FIG 3